Europäisches Patentamt

European Patent Office

Office européen des brevets

(11) Publication number: **0 147 653 B1**

(12) # EUROPEAN PATENT SPECIFICATION

(45) Date of publication of patent specification: **20.03.91**　(51) Int. Cl.⁵: **C08L 71/12, C08L 69/00, C08L 53/02**

(21) Application number: **84114416.5**

(22) Date of filing: **28.11.84**

(54) High impact polyphenylene ether compositions having improved processability.

(30) Priority: **01.12.83 US 556888**

(43) Date of publication of application:
**10.07.85 Bulletin 85/28**

(45) Publication of the grant of the patent:
**20.03.91 Bulletin 91/12**

(84) Designated Contracting States:
**DE FR GB IT NL**

(56) References cited:
**DE-A- 2 418 763**　**DE-A- 3 400 540**
**FR-A- 2 375 297**　**US-A- 3 933 941**
**US-A- 4 102 854**　**US-A- 4 123 410**

(73) Proprietor: **GE CHEMICALS, INC.**
**Parkersburg Center 5th & Avery Streets**
**Parkersburg, West Virginia 26102(US)**

(72) Inventor: **Falk, John Carl**
**3608 Russett**
**Northbrook Illinois 60062(US)**
Inventor: **Jalbert, Ronald L.**
**61 Canterbury Dr. Woodland Park**
**Parkersburg West Virginia 26101(US)**
Inventor: **Khait, Klementina F.**
**5240 Cleveland**
**Skokie Illinois 60077(US)**

(74) Representative: **Vossius & Partner**
**Siebertstrasse 4 P.O. Box 86 07 67**
**W-8000 München 86(DE)**

EP 0 147 653 B1

## Description

This invention relates to polyphenylene ether compositions and more particularly to impact-modified polyphenylene ether compositions having improved processability, and to a method for improving the processability of impact-modified polyphenylene ether compositions.

Polyphenylene ether (PPE) resins have long been known as high temperature thermoplastics. For example, PPO, or poly(2,6-dimethyl-1,4-phenylene ether) was disclosed and described in US patents 3,134,753 and 3,306,874. More recently, in US patent 4,011,200 phenylene ether copolymer resins having improved thermal stability were described. PPE resins generally soften or melt only at very high temperatures and are very difficult to melt process in conventional molding equipment. Commonly, PPE resins are blended with lower melt temperature resins to improve their melt processability and to achieve commercially acceptable molding characteristics. For example, blends of polyphenylene ether resins with styrenic resins such as those shown in US 3,356,761, 3,383,435 and 4,038,543 are considerably more readily processable than PPE resins alone, and have found substantial commercial application as molding resins. Although blends of polyphenylene ether resins with lower melt temperature styrenic resins may be formulated to have good mechanical properties and are much improved in processability over the polyphenylene ether resins alone, such blends generally exhibit a significantly lowered heat distortion temperature compared with that of the corresponding PPE resin. Consequently, the upper use temperature limits for these blends is reduced below that of polyphenylene ether resins alone.

Blends of poly(2,6-disubstituted)phenylene ether resins, and particularly PPO, with a variety of rubbery impact modifiers have also been disclosed in the art. For example, high impact blends of PPO containing greater than 30 wt% of a combination of block copolymer rubbers were disclosed in US 4,113,800. In US 4,167,507 there are disclosed impact modified blends of PPO and a hydrogenated ABA block copolymer rubber. These latter blends include a plasticizer and a styrenic resin to achieve processability, which in turn substantially depress the HDT value of these resin blends. In US 3,660,531, rubber modified blends of PPO are shown to have greatly enhanced processability when a styrenic resin is included. Again, the including of a styrenic resin and/or a plasticizer substantially reduces the HDT value for such blends and limits their upper end-use temperature properties.

The market place continues to find a need for processable high impact thermoplastic resins with a good balance of mechanical properties and even higher end-use temperature performance, demands which are not satisfactorily met by the presently available resin compositions.

This invention is an improved impact-modified thermoplastic polyphenylene ether blend having improved processability, comprising a polyphenylene ether, a rubbery impact modifier and an aromatic polycarbonate of a bis (3,5-dialkyl-4-hydroxyphenyl) alkane per 100 parts of said blend. The blends exhibit excellent high temperature performance and impact properties, and achieve good melt processing characteristics without a substantial decrease in heat distortion temperature values.

The compositions of this invention comprise 100 parts by weight of an impact modified PPE and from 5 to 25 parts by weight of an aromatic polycarbonate of a bis(3,5-dialkyl-4-hydroxyphenyl) alkane per 100 parts of said blend . The impact modified PPE comprises a thermoplastic blend of from 95 to 75 wt% of a polyphenylene ether resin and from 5 to 25 wt% of a rubbery impact modifier. The aromatic polycarbonate serves as an aid to melt processability without greatly reducing the HDT values of the impact modified PPE.

The polyphenylene ether resins useful for the purposes of this invention include both the homopolymers prepared by oxidative coupling of a 2,6-dialkyl phenol as disclosed for example in US 3,306,874 as well as the copolymers of 2,6-dialkyl phenols and 2,3,6-trialkyl phenols, described in US 4,011,200. In general, the polymers are prepared by oxidative coupling of a 2,6-dialkyl phenol such as 2,6-dimethyl phenol or a mixture of a 2,6-dialkyl phenol and a 2,3,6-trialkyl phenol such as 2,3,6-trimethyl phenol. In forming copolymers suitable for the practice of this invention, the proportion of 2,3,6-trialkyl phenol will lie in the range of from about 2 to 50 wt% based on total polyphenylene ether. However, the preferred copolymers will comprise from about 2 to 20, more preferably from about 2 to 10 wt% 2,3,6-trialkyl phenol and correspondingly from about 98 to about 80, more preferably from about 98 to about 90 wt% 2,6-dialkyl phenol. The synthesis of these homopolymers and copolymers by a variety of oxidative coupling processes is well known in the art, and such polymers have become available to the art from commercial sources.

The rubbery impact modifiers useful in the practice of this invention are those used in the art alone or in combination to impact-modify PPE resins and include a wide variety of diene rubbers, polyolefins, and ABA block copolymer rubbers. For example, ABA block copolymers are useful as impact modifiers in the practice of this invention, including those described in US patent 3,431,323. In general, these block copolymers are copolymers having end blocks A formed of vinyl aromatic hydrocarbon monomer such as for example styrene, vinyl toluene, alphamethyl styrene or mixtures thereof and a center block formed of a

2

1,3-diene such as 1,3-buta-diene, isoprene . The ABA block copolymers may be hydrogenated to reduce the ethylenic unsaturation to less than 10% of the original value. The unhydrogenated ABA block copolymers are also useful as impact modifiers for PPE resins in the practice of this invention. The ratio of A and B units and the molecular weights of the ABA block copolymers may be varied widely, however the A blocks will preferably comprise from 2-23% by weight of the total block polymer. These block polymers are widely available commercially both in hydrogenated and unhydrogenated form, particularly as the Kraton-G series of hydrogenated ABA block copolymers as well as the unhydrogenated Kraton ABA block copolymer elastomers from Shell Chemical Company. Other rubbery impact modifiers known to be useful for the impact modification of PPE resins and therefore useful in the practice of this invention include radical block styrene-1 ,3-diene copolymers and high-rubber graft copolymers, as well as polyolefins such as for example polyethylene, polybutene rubbers, ethylene-propylene copolymers and terpolymers and the like.

The aromatic polycarbonate resins useful as a melt processing aid in the practice of this invention are also well known in the art. In general, the polycarbonate resins may be described as being prepared by reacting a carbonate precursor such as phosgene with hindered dihydric phenols.

Said hindered dihydric phenols include bis(3,5-dialkyl-4-hydroxyphenyl)alkanes such as for example 2,2-bis(3,5-dimethyl-4-hydroxyphenyl)propane, 2,2-bis (3,5-diethyl-4-hydroxyphenyl)propane,or 2,2-bis(3,5-diisopropyl-4-hydroxyphenyl)propane. The preparation of the corresponding carbonate homopolymers is disclosed in U.S. 3,879,348, while typical copolymers are set forth in U.S. 3,879,347.

The compositions of this invention will comprise 100 parts by weight of a blend of a polyphenylene ether and a rubbery impact modifier and from 5 to 25 parts by weight of an aromatic polycarbonate. The blend will comprise from 98 to 75 wt% of the polyphenylene ether and from 2 to 25 wt% rubbery impact modifier.

The compositions of this invention may be prepared by any of a variety of methods well known in the art. For example, the resins may be dissolved in suitable solvents, the resulting solutions mixed in the desired proportions, and the resin mixture isolated by coagulation or by removing the solvent by evaporation or stripping. Alternatively, an intimate mixture of the powdered resins may be prepared by a dry-blending technique and then compression molded. Thermal processing in a melt mixing device such as a Banbury mixer, a heated roll mill or an extruder may be used to provide a resin blend which then may be chopped or ground into particles and fed to an injection molding machine, provided that thorough melt mixing is accomplished.

Complete and thorough mixing of the resin components is essential to attaining good physical properties. The aromatic polycarbonate component of the compositions of this invention appears to serve to increase the melt processability of the PPE resin component, improving the rapidity of mixing of the PPE resin with the rubbery impact modifier and resulting in a more complete and uniform mixing of the components. The preferred method of melt-mixing the compositions of this invention, particularly when employing such devices as Banbury mixers, Brabender laboratory mixing heads or single-screw extruders, will thus be a sequential process wherein the PPE resin and polycarbonate resin components will first be thoroughly melt-mixed or fluxed before the addition of the rubbery impact modifier. This preferred process may be accomplished in a variety of ways, including first melt-fluxing the PPE resin alone, then adding the polycarbonate resin, melt-mixing the two component blend, and finally adding the rubbery impact modifier to the melt and completing the melt-mixing. The use of sequential extrusions or a two-stage extruder for such mixing processes will be apparent to those skilled in the art.

The compositions are useful as high impact extrusion and molding resins. The blends may further comprise flame retardants, anti-oxidants, stabilizers, pigments, dyes, fillers, reinforcing fibers, plasticizers and processing aids as is well known in the resin molding art.

The compositions of this invention will be better understood by consideration of the following examples. These examples are not offered in limitation of the invention but rather in illustration of the preferred embodiments.

In the examples, the following abbreviations and terms are employed:

PEC = copolymer of 2,6-dimethylphenol (95%) and 2,3,6-trimethylphenol (5%).

PC = polycarbonate of 2,2-bis(4-hydroxyphenyl) propane, obtained as Lexan® 105 from General Electric Company.

MPC = polycarbonate of 2,2-bis(3,5-dimethyl-4-hydroxyphenyl)propane, prepared substantially by the process of US 3,879,348.

PPO = homopolymer of 2,6-dimethylphenol, obtained
from Aldrich Chemical Co.
HDT = deflection temperature at 1.82 MPa (264 psi), ASTM D668.
Impact = Izod impact, ft lbs/in notch, ASTM D256A;
unnotch values obtained on specimens without notch,
ave. of 5 samples except where indicated by ( ).
Rubber = Rubbery impact modifier; examples of
Tables I-III employ hydrogenated styrene-butadiene-
styrene block copolymer, obtained as Kraton G® from
Shell Chemical Co. Examples of Table IV employ
alternate impact modifiers as shown.

In the examples, blends of the indicated PPE resin, rubbery impact modifier and aromatic polycarbonate were prepared by melt blending or by solution blending where necessary. The processes used were generally as follows:

Melt-Blending: Blends were prepared in a Brabender mixing head by first fluxing the polyphenylene ether at 285-295°C, then adding the requisite amounts of first the aromatic polycarbonate and then the impact modifier, and mixing at 290°C for 7 min. The blends were then removed from the Brabender mixer, cooled to room temperature, chopped and fed to a two-roll mill. The blends were then milled at 275-290°C for 5 to 6 min., sheeted out, diced and compression molded at 290-300°C for 6-7 min. to form test specimens.

Solution Blending: Solution blends were prepared by mixing 4.35 wt% solutions of the respective resins in chloroform solvent, coagulating the blend with 10 volumes of methanol, collecting the coagulated resin and drying at 100°C for 16 to 24 hrs. The dried resin blends were then milled at 293°C for 5 to 6 min. on a two-roll mill, cooled, diced and compression molded at 293°C for 7 min.

Comparative Examples A-N: In Examples D,F,G,H,I,M, and N blends of the indicated PPE resin, rubbery impact modifier (Kraton G) and aromatic polycarbonate (Lexan 105) were prepared and molded by the melt-blending procedure described above. The various formulations are summarized together with their impact and heat distortion properties in Table I. Examples A, C, K, and L were prepared substantially by the melt process. Examples B and Example E were prepared by the solution blending process.

## Table I

| Ex | PPE | | Rubber | PC | HDT | IMPACT | |
| No | type | pbw | pbw | phr | °C | notch | unnotch |
|---|---|---|---|---|---|---|---|
| A | PEC | 100 | 0 | 0 | 195 | 1.0 | 49 |
| B | *PEC | 90 | 10 | 0 | 193 | 1.1 | 45 |
| C | PEC | 80 | 20 | 0 | 190 | 0.5 | 7.0 |
| D | PEC | 94 | 6 | 11 | 188 | 1.0 | 15 |
| E | *PEC | 89 | 11 | 5 | 185 | 8.5 | 28 |
| F | PEC | 89 | 11 | 11 | 183 | 5.0 | 20 |
| G | PEC | 89 | 11 | 22 | 179 | 1.1 | 12 (4) |
| H | PEC | 84 | 16 | 21 | 165 | 2.5 | 14 (4) |
| I | PEC | 83 | 17 | 83 | 140 | 2.0 | 37 (4) |
| K | PPO | 100 | 0 | 0 | 191 | 0.8 | 37 |
| L | PPO | 80 | 20 | 0 | 185 | <0.5 | 5.5 |
| M | PPO | 88 | 12 | 25 | 180 | 0.8 | 20 |
| N | PPO | 84 | 16 | 21 | 167 | 1.5 | 37 (3) |

Notes:   For definitions, see text.  All compositions are melt-blended except * blends, which were solution-blended; see text.

In the melt-blending of said Examples, it was observed that by first completely fluxing the polyphenylene ether resin, then adding the polycarbonate and fluxing the two-component mixture, and then finally adding the rubbery impact modifier and completing the melt-mixing, a rapid and completely uniform blend was obtained without observable degradation. The apparent melt-viscosity of the two-component PPE-polycarbonate mixture was observed to be lower, permitting ready dispersion of the impact modifier in the final blending step. When the aromatic polycarbonate and rubbery impact modifier were added simultaneously to the fluxed PPE resin in the Brabender mixing head, extended mixing was required to obtain a uniform melt blend.

By way of comparison, the direct addition of rubbery impact modifier to the fluxed PPE resin in the Brabender mixing head did not result in a uniform blend. An attempt to prepare a composition equivalent to Example B by first fluxing 90 pbw PPE at 293° C, then adding 10 pbw rubbery impact modifier was completely unsuccessful. The impact modifier could not be dispersed in the PPE melt even with extended mixing, and the mixture degraded, becoming an intractable crumb. Melt-blending of Examples C and L was somewhat more successful, the higher level of styrenic impact modifier contributing to reducing the apparent melt viscosity and thus improving the mixing character of the PPE resin melt. However, extended mixing times were required for these latter compositions, and degradation was difficult to avoid. It will thus be apparent that the addition of moderate amounts of an aromatic polycarbonate to a PPE resin permits the ready incorporation of rubbery impact modifiers and allows the preparation of uniform impact modified PPE resin blends.

In US 4,077,934 there is disclosed an improved process for incorporating impact modified polystyrene into polyphenylene oxide resin by first pre-blending the PPO resin with a plasticizer such as triphenylphosphate or the like to lower the melt temperature of the PPO resin component. As is well known, such techniques also substantially lower the HDT value for such blends. As will be seen from the HDT values for the compositions of this invention as summarized in Table I, the addition of moderate amounts of an aromatic polycarbonate serves to improve the processability of PPE resins without severely depressing the heat distortion temperature values for the resulting blends.

Examples 1-9 and Comparative Examples U-Z

In the following (Comparative) Examples summarized in Table II, blends of PEC polyphenylene ether copolymer resin, Kraton G hydrogenated ABA block copolymer resin and MPC, a high temperature aromatic polycarbonate of 2,2-bis (3,5-dimethyl-4-hydroxyphenyl)propane were prepared, milled and molded substantially by the solution blending process set forth above. Similarly, blends of PPO polyphenylene oxide resin, Kraton G hydrogenated ABA block copolymer resin and MPG were prepared, milled and molded substantially by the same solution blending process. The formulations and physical properties are summarized in Table III.

## Table II

| Ex No | PEC pbw | Rubber pbw | MPC phr | HDT °C | IMPACT | |
|---|---|---|---|---|---|---|
| | | | | | notch | unnotch |
| 1 | 94 | 6 | 24 | 187 | 2.0 | 62 (4) |
| 2 | 89 | 11 | 11 | 196 | 9.6 | 32 |
| 3 | 89 | 11 | 22 | 185 | 6.0 | 42 (4) |
| U | 91 | 9 | 91 | 183 | 1.0 | 21 |
| 4 | 84 | 16 | 5 | 180 | 9.2 | 30 |
| 5 | 84 | 16 | 21 | 183 | 9.0 | 44 (4) |
| V | 83 | 17 | 83 | 184 | 3.0 | 20 |
| 6 | 80 | 20 | 5 | 179 | 10.2 | 30 |
| W | 80 | 20 | 320 | 181 | 2.0 | 13 |
| X | 77 | 23 | 77 | 174 | 5.0 | 36 |

Notes: For term definitions, see text. All composi-
tions are solution-blended; see text.

## Table III

| Ex No | PPO pbw | Rubber pbw | MPC phr | HDT °C | IMPACT | |
|---|---|---|---|---|---|---|
| | | | | | notch | unnotch |
| 7 | 94 | 6 | 24 | 188 | 2.2 | 33 (3) |
| 8 | 89 | 11 | 22 | 181 | 4.7 | 21 |
| Y | 91 | 9 | 91 | 176 | 1.5 | 7.5 |
| 9 | 84 | 16 | 21 | 175 | 7.3 | 39 (3) |
| Z | 83 | 17 | 83 | 173 | 3.0 | 19 |

Notes:    For term definitions, see text.    All composi-
tions are solution-blended; see text.

As with the impact-modified PPE compositions containing Lexan 105 polycarbonate of Table I, the addition of MPC aromatic polycarbonate improves the melt processing characteristics of impact modified PEC (Table II) and impact modified PPO (Table III) while sharply and surprisingly improving the notched impact properties of the impact modified PPE resins. The compositions of Examples 1-9 and Comparative Examples U-Z readily injection molded and extruded on twin screw machines. A composition equivalent to Example 5 was also readily prepared in a Brabender mixing head at 285-295° C by the procedure outlined above without difficulty. For a particular level of impact modifier, the further addition of polycarbonate beyond a level of about 25 pbw reduces the notched impact value of the composition. Compare Example 2 with Examples 3 and U, Example 4 with 5 and V, Example 6 with W, Example 8 with Y, and Example 9 with Z. MPC polycarbonate resin is a higher melt temperature resin than Lexan 105, hence the HDT value for the resulting blends is less quickly depressed for compositions containing MPC resin. It is none-the-less surprising that impact-modified PEG copolymer blends tolerate very much larger amounts of MPC than do impact-modified PPO homopolymer blends without depressing the HDT value below 180° C. Compare Example W with Examples Y, 9, and Z.

It will thus be apparent that the relative proportions of PPE resin, impact modifier and aromatic polycarbonate resin will be selected with a view toward the particular end-use envisioned, and will depend in part upon the particular PPE resin, impact modifier and aromatic polycarbonate employed.

The invention will thus be seen to be a thermoplastic resin composition comprising 100 parts by weight of a blend consisting of from 98 to 75 wt% of a polyphenylene ether and from 2 to 25 wt% of a rubbery impact modifier and from 5 to 25 parts by weight of an aromatic polycarbonate, and a method for improving the melt processability of impact-modified polyphenylene ether blends comprising including an aromatic polycarbonate. The blends exhibit useful properties and improved processability.

### Claims

1. A thermoplastic resin composition comprising:

100 parts by weight of a blend consisting of from 98 to 75 wt% of a polyphenylene ether and from 2 to 25 wt% of a rubbery impact modifier ; and

from 5 to 25 parts by weight of an aromatic polycarbonate of a bis (3,5-dialkyl-4-hydroxyphenyl) alkane per 100 parts of said blend.

2. The composition of claim 1 wherein said polyphenylene ether is homopolymer of 2,6-dialkylphenol or a copolymer of 2,6-dialkylphenols and 2,3,6-trialkylphenols.

3. The composition of claim 1 wherein the bis (3,5-dialkyl-4-hydroxyphenyl) alkane is 2,2-bis(3,5-dimethyl-4-hydroxy-phenyl) propane,2,2-bis(3,5-diethyl-4-hydroxyphenyl)propane, or 2,2-bis(3,5-disiopropyl-4-hydroxyphenyl) propane, or a copolymer thereof.

4. The composition of claim 1 wherein the rubbery impact modifier is a styrene-butadiene-styrene block copolymer ,a hydrogenated styrene-butadiene-styrene block copolymer, a polyolefin, or a mixture thereof.

5. A method for improving the melt processability of a blend comprising a polyphenylene ether resin and a rubbery impact modifier, said method comprising the step of including from 5 to 20 parts by weight, per hundred parts of said blend, of an aromatic polycarbonate.

6. A method for preparing impact-modified polyphenylene ether resin compositions having improved melt-processability comprising the steps of:

first combining a polyphenylene ether resin with an aromatic polycarbonate resin under melt-processing conditions to form a preblend, and

thereafter combining said preblend under melt-processing conditions with a rubbery impact modifier.


**Revendications**

1. Composition de résine thermoplastique comprenant :

100 parties en poids d'un mélange constitué par de 98 à 75% en poids d'un poly(oxyphénylène) et de 2 à 25% en poids d'un agent de modification de la résistance au choc caoutchouteux et

de 5 à 25 parties en poids d'un polycarbonate aromatique d'un bis(dialkyl-3,5 hydroxy-4 phényl) alcane pour 100 parties du mélange.

2. Composition selon la revendication 1, dans laquelle le poly(oxyphénylène) est un homopolymère de dialkyl-2,6 phénol ou un copolymère de dialkyl-2,6 phénols et de trialkyl-2,3,6 phénols.

3. Composition selon la revendication 1, dans laquelle
le bis(dialkyl-3,5 hydroxy-4 phényl) alcane est
le bis(diméthyl-3,5 hydroxy-4 phényl)-2,2 propane,
le bis(diéthyl-3,5 hydroxy-4 phényl)-2,2 propane ou
le bis(diisopropyl-3,5 hydroxy-4 phényl)-2,2 propane
ou un de leurs copolymères.

4. Composition selon la revendication 1, dans laquelle l'agent de modification de la résistance au choc caoutchouteux est un copolymère séquencé styrène-butadiène-styrène, un copolymère séquencé styrène-butadiène-styrène hydrogéné, une polyoléfine ou un de leurs mélanges.

5. Procédé pour améliorer l'aptitude à la transformation à l'état fondu d'un mélange comprenant une résine de poly(oxyphénylène) et un agent de modification de la résistance au choc caoutchouteux, ce procédé comprenant l'étape d'incorporation de 5 à 20 parties en poids d'un polycarbonate aromatique pour cent parties en poids du mélange.

6. Procédé de préparation de compositions de résines de poly(oxyphénylène) dont on a modifié la résistance au choc, présentant une meilleure aptitude à la transformation à l'état fondu, comprenant les étapes :

tout d'abord de combinaison d'une résine de poly(oxyphénylène) et d'une résine de polycarbonate aromatique dans des conditions de transformation à l'état fondu pour former un prémélange

puis de combinaison du prémélange, dans des conditions de transformation à l'état fondu, et d'un agent de modification de la résistance au choc caoutchouteux.

**Ansprüche**

1. Thermoplastische Harzmasse umfassend:
    100 Gew.-Teile eines Gemisches bestehend aus 98 bis 75 Gew.-% eines Polyphenylenethers und 2 bis 25 Gew.-% eines kautschukartigen, die Schlagzähigkeit modifizierenden Zusatzes; und
    5 bis 25 Gew.-Teile eines aromatischen Polycarbonats eines Bis(3,5-dialkyl-4-hydroxyphenyl)-alkans pro 100 Teile des genannten Gemisches.

2. Masse nach Anspruch 1, in der der Polyphenylenether ein Homopolymer von 2,6-Dialkylphenol oder ein Copolymer von 2,6-Dialkylphenolen und 2,3,6-Trialkylphenolen ist.

3. Masse nach Anspruch 1, in der das Bis(3,5-Dialkyl-4-hydroxyphenyl)-alkan 2,2-Bis(3,5-dimethyl-4-hydroxyphenyl)-propan, 2,2-Bis(3,5-diethyl-4-hydroxyphenyl)-propan, oder 2,2-Bis(3,5-diisopropyl-4-hydroxyphenyl)-propan oder ein Copolymer davon ist.

4. Masse nach Anspruch 1, in der der kautschukartige, die Schlagzähigkeit modifizierende Zusatz ein Styrol-Butadien-Styrol-Blockcopolymeres, ein hydriertes Styrol-Butadien-Styrol-Blockcopolymeres, ein Polyolefin oder ein Gemisch davon ist.

5. Verfahren zur Verbesserung der Verarbeitbarkeit in der Schmelze eines Gemisches, umfassend ein Polyphenylenetherharz und einen kautschukartigen, die Schlagzähigkeit modifizierenden Zusatz, wobei das Verfahren den Schritt umfaßt, 5 bis 20 Gew.-Teile eines aromatischen Polycarbonats pro 100 Teile des Gemisches aufzunehmen.

6. Verfahren zur Herstellung von Polyphenylenetherharzmassen mit modifizierter Schlagzähigkeit, die verbesserte Verarbeitbarkeit in der Schmelze haben, umfassend die Schritte:
    zuerst das Zusammenbringen eines Polyphenylenetherharzes mit einem aromatischen Polycarbonatharz unter Bedingungen des Verarbeitens in der Schmelze, um ein Vorgemisch zu erzeugen, und
    danach Zusammenbringen des Vorgemisches unter Bedingungen des Verarbeitens in der Schmelze mit einem kautschukartigen, die Schlagzähigkeit modifizierenden Zusatz.